# EUROPEAN PATENT APPLICATION

(11) **EP 4 509 839 A1**
(43) Date of publication of application: **19.02.2025**
(21) Application number: 23191648.7
(22) Date of filing: 16.08.2023
(51) Int. Cl.: G01N 35/02, G01N 35/04

(54) **A LABORATORY AUTOMATION SYSTEM FOR PROCESSING SAMPLE CONTAINERS**

(71) Applicant: Beckman Coulter, Inc., Brea, CA 92821 (US)
(72) Inventor: LADESTEIN, Paul, 4906 HC Oosterhout (NL); KASSE, Simon, 4143 VE Leerdam (NL); MÜLLER, Martin, 83727 Schliersee (DE)
(74) Representative: Maiwald GmbH

(57) **Abstract**

Aspects relate to a laboratory automation system, a computer-implemented method, and a computer program for processing sample containers. The laboratory automation system comprises a storage unit configured to receive and store sample containers. The laboratory automation system further comprises at least one laboratory instrument configured to process samples contained in the sample containers. The laboratory automation system further comprises a conveying unit configured to convey sample containers between the storage unit and the laboratory instrument. The storage unit comprises a pick-and-place unit, a working section, a storing section, and a transfer unit. The working section is configured such that a plurality of sample containers may be arranged therein to be accessible by the pick-and-place unit. The pick-and-place unit is configured to pick up a sample container in the working section and to place said sample container on the conveying unit. The storing section is configured such that a plurality of sample containers may be arranged therein by a user, and the transfer unit is configured to transfer the sample containers between the working section and the storing section.

## Description

The technical field relates to processing sample containers in a laboratory. In particular, the present disclosure relates to a system (e.g., a laboratory automation system) and method for processing sample containers by means of a storage unit and a laboratory instrument.

The number of tasks that need to be processed in a laboratory may fluctuate. More specifically, there may be peak times in which many more sample containers arrive than can be quickly processed. Accordingly, laboratory instruments in the laboratory as well as conveying units in the laboratory may become blocked or clogged. In addition, holders of sample containers may pile up in front of the loading area, which may create additional work for laboratory personnel and take up valuable space in the laboratory. The arrival of an unusually large number of sample containers within a short time period may be particularly problematic with regard to samples requiring immediate processing. For example, some samples may require centrifugation to be punctually performed in order to avoid jeopardizing the quality of the samples.

Conventional approaches to solving this problem involve obtaining additional laboratory instruments or even a further laboratory automation system. However, this can result in high costs, space consumption and eventual underutilization of the additional laboratory instruments and/or the further laboratory automation system , especially outside peak times.

According to a first aspect, a laboratory automation system for processing sample containers is provided. The system comprises a storage unit configured to receive and store sample containers. The system further comprises at least one laboratory instrument configured to process samples contained in the sample containers. The system further comprises A conveying unit configured to convey sample containers between the storage unit and the laboratory instrument. The storage unit comprises a pick-and-place unit, a working section, a storing section, and a transfer unit. The working section is configured such that a plurality of sample containers may be arranged therein to be accessible by the pick-and-place unit. The pick-and-place unit is configured to pick up a sample container in the working section and to place the sample container on the conveying unit. The storing section is configured such that a plurality of sample containers may be arranged therein by a user. The transfer unit is configured to transfer the sample containers between the working section and the storing section.

In addition, the pick and place unit may be configured to pick up a sample container from the conveying unit and place the sample container in the working section.

The storing section may be distinguished from the working section in that the storing section is accessible by a user whereas the working section is not accessible by a user. More specifically, the storing section may be accessible during normal operation of the laboratory automation system. Samples may be added to the storing section without disrupting the operation of the automated laboratory.

The pick-and-place unit may be implemented as a robot or a device with robotic capability.

A laboratory may be a technical system including one or more laboratory instruments. The laboratory instruments may be capable of communicating with each other and/or communicating with other devices (e.g., computers). The laboratory instruments may also be referred to as laboratory devices or laboratory equipment and may include laboratory automation.

The laboratory may be a clinical or medical laboratory. The laboratory may include one or more laboratory instruments and/or at least one computer. The laboratory may be configured to receive biological samples from clinical or medical facilities, such as hospitals. Alternatively, the laboratory may be a part of a clinical or medical facility and may receive biological samples from another part of the clinical or medical facility.

The laboratory automation system (LAS) may be an assembly comprising a plurality of components. The LAS may also be referred to as an automated laboratory system. One or more computing devices may be operatively connected to these components and configured to control each component. The LAS may comprise one or more subsystems, wherein a subsystem comprises one or more components of the LAS.

Sample containers (e.g., test tubes) may contain biological samples. A biological sample may be associated with a patient. For example, the container may include a machine-readable code (e.g., a barcode) identifying the patient, a doctor, a hospital, a desired analysis test and possibly other health information. Accordingly, a surgical procedure may be scheduled and can only take place after results of a clinical test have been received. Moreover, a patient's life may depend on the results of the clinical test being received by a specified completion time, e.g., so that a life-saving surgical procedure may be performed.

A clinical test (i.e., clinical laboratory test) may be diagnostic and/or medical. The clinical test may include use of a chemical and/or biological process to determine or measure a level of a chemical component in a bodily fluid and/or bodily tissue. The chemical component may include blood glucose, an electrolyte, an enzyme, a hormone, a lipid (fat), another metabolic substance or a protein. The clinical test may be used to identify a sign of a nutrient deficiency in a patient, detect a change in the health of the patient, evaluate bodily functions of the patient (e.g., kidney function, liver function or thyroid function), monitor treatment of the patient or disease progression in the patient. In particular, a clinical test may comprise physical, biological, optical, mechanical, immunological, and/or chemical procedures. Exemplarily, a clinical test may be an immunoassay test. The biological sample may be a material or specimen and may include blood, urine, tissue, cells, saliva, etc. A plurality of processing steps may be dependent on the clinical test and/or the plurality of processing steps may be specific to the clinical test.

The conveying unit may be for moving containers from one component of the laboratory automation system to another component of the laboratory automation system. The conveying unit may include a track, a belt and/or a carrier configured to move biological samples. A robot or robotic arm may be connected to the conveying unit in order to place containers on the conveying unit or take containers off the conveying unit.

The laboratory automation system may enable rapid increases in the number of sample containers arriving at a laboratory (i.e., peak load) to be efficiently handled. Specifically, instead of requiring new and expensive laboratory instruments to handle peak loads of sample containers, the sample containers can instead be stored in the storage unit and processed when the laboratory instrument becomes available. This may also help prevent or reduce underutilization of the laboratory instrument when the peak loads passes and the number of sample containers in the laboratory returns to a standard or normal number. For example, a normal/average load at a laboratory may be about 500 sample containers per hour and a peak load may be over 3000 or over 5000 sample containers per hour. Put another way, the peak load may be over 5 times the normal load or over 10 times the normal load.

Accordingly, the storage unit may have a capacity of at least 5 times the (average) hourly throughput of the laboratory automation system or at least 10 times the hourly throughput of the laboratory automation system. For example, the capacity of the storage unit may be at least 1,000 sample containers, at least 2,000 sample containers, at least 5,000 sample containers or at least 10,000 sample containers.

In some cases, the sample containers may need to be stored vertically in order to preserve the quality of the samples.

The storage unit may function as an input to the laboratory automation system, a buffer of the laboratory automation system and an endpoint of the laboratory automation system.

In some cases, the conveying unit is configured to convey the sample containers in sample container carriers. The sample containers may be arranged in sample container holders in the working section. The sample container holders may be identical to the sample container carriers. In addition or alternatively, the sample container holders may be implemented as multi-sample racks. The pick-and-place unit may be configured to pick up the sample container from a sample container holder in the work section and to place the sample container on a sample container carrier on the conveying unit. In addition or alternatively, the pick-and-place unit may be configured to pick up the sample container from the sample container on the conveying unit and place the sample container in the sample container holder in the work section. The transfer unit may be configured to transfer the sample container holders between the working section and the storing section.

The storage unit may further comprise a cooling unit configured to control air temperature. The cooling unit may be configured to cool the working section and/or the storage section. In addition or alternatively, the cooling unit may be configured to cool the entire storage unit. The cooling unit may be implemented as a refrigeration unit.

The cooling unit may have the advantage of keeping samples cool while the samples are in the storage unit. In some cases, maintaining sample quality may depend on keeping the sample cool rather than at ambient temperature.

The storage unit may have a capacity to store at least five times or at least ten times the average number of sample containers that are processed in the laboratory. For example, if the laboratory processes an average of 500 sample containers per hour, the storage unit may have a capacity to store at least 5000 sample containers.

Accordingly, the storage unit may ensure sufficient loading capacity for all sample containers arriving at the laboratory, even at peak times.

Moreover, the storage unit may help avoid underutilization of laboratory equipment, particularly during nonpeak times.

The storage unit may also ensure that sample containers are processed when the laboratory instrument is available to process them. Hence, in contrast to a situation in which carriers of the sample containers are stacked near the laboratory automation system, the storage unit may ensure processing of sample containers without user intervention by tracking when the laboratory automation system (e.g., the laboratory instrument) is available to process further sample containers. This may also help to avoid underutilization of the laboratory automation system, particularly, underutilization of laboratory instruments of the laboratory automation system.

Underutilization of laboratory instruments may be a consequence of installing enough laboratory instruments to handle all the sample containers arriving at the laboratory during peak times. The storage unit may make it possible to process the same number of sample containers that could be processed with additional laboratory instruments, over a longer period of time. Hence, use of the storage unit could save the costs of the additional laboratory instruments and improve the overall efficiency of the laboratory.

The storage unit may be modular. Specifically, storing sections, working sections, transfer units, and pick-and-place units may be added or removed as needed. Similarly, corresponding cooling units may be added or removed along with the storing and/or working sections.

Moreover, the storage unit may decouple the loading of the sample tubes from the processing capacity of the LAS and enable unsupervised loading of the LAS.

The conveying unit may be configured to convey sample containers to the laboratory instrument based on a load of the laboratory instrument. For example, if the load of the laboratory instrument indicates that the laboratory instrument is busy or unable to process further containers, the conveying unit might not convey sample containers to the laboratory instrument. Otherwise, if the load of the laboratory instrument indicates that the laboratory instrument is able to process further containers, the conveying unit might convey sample containers to the laboratory instrument. The conveying unit may be configured to convey the sample containers to the laboratory instrument based on instructions received from a computing device.

A computing device may be configured to determine the load of the laboratory instrument and may trigger conveyance of the sample containers to the laboratory instrument via the conveying unit.

In some cases, the LAS may include multiple laboratory instruments. In such cases, load balancing may be applied so as to efficiently utilize the laboratory instruments, e.g., by monitoring the load of each of the laboratory instruments and configuring the conveying unit to convey sample containers to a laboratory instrument that is available for processing the sample containers.

The system may further comprise an input component configured to receive sample containers and/or a distribution component configured to receive container information for each of the sample containers, the container information comprising a container priority. The conveying unit may be configured to convey the sample containers from the input component to the distribution component.

The container priority may refer to processing priority or testing priority. Processing priority may determine which sample needs to be processed in order to avoid deterioration or degradation. Testing priority may determine which sample needs to be processed in view of external factors, such as an upcoming surgical procedure or for determination of the health of a patient.

The input component may be implemented as an input drawer. The distribution component may be implemented as a distribution drawer.

The input component and/or the distribution component may include a scanning device operable to scan the sample containers. For example, each of the sample containers may include a machine-readable code and the scanning device may be operable to read the machine-readable code in order to determine the container information.

In some cases, the input component and/or the distribution component may be implemented as part of the storage unit. More specifically, the input component and/or the distribution component may be implemented as part of the storing section. Alternatively, the input component and/or the distribution component may be implemented as part of the working section or as part of the working section and the storing section.

In some cases, the distribution component may be implemented along the conveying unit, e.g., between the input component and the storage unit.

The container information may further comprise a holder and/or carrier identifier.

In some cases, a bulk loader may be provided adjacent to the storage unit. Alternatively, the bulk loader may be part of the storage unit. The bulk loader may be operable to handle individual sample containers and/or to receive container information (e.g., via a scanning device to scan labels of the containers) prior to placing the containers in container carriers or holders in the storage unit. An advantage of the bulk loader would be that container information would be available to the laboratory automation system before the containers are stored in the storage unit.

The bulk loader may be loaded with unsorted tubes, e.g., via a hopper (i.e., a container that tapers downward and is able to discharge its contents at the bottom). The tubes may be poured into the hopper by the user and then processed one at a time by the system.

The system may further comprise a computing device configured to determine, based on a load of the laboratory instrument, whether the laboratory instrument is able to process further sample containers. The conveying unit may be further configured to convey, upon determining that the laboratory instrument is unable to process further sample containers, the sample containers from the distribution component to the storage unit. The computing device may be further configured to prioritize the sample containers in the storage unit for processing by the laboratory instrument according to the corresponding container priority of each sample container. Upon determining that the laboratory instrument is able to process further sample containers, the computing device may be further configured to instruct the pick-and-place unit to extract, from the working section, at least one of the sample containers for processing by the laboratory instrument according to the corresponding container priority. The conveying unit may be further configured to transport the sample containers to the laboratory instrument for processing.

In some cases, sample containers having a relatively low priority may be placed in a more distant portion of the storage unit (with respect to the transfer unit) while sample containers having a relatively high priority may be placed in a nearer portion of the storage unit in order to minimize the movement required of the transfer unit. For example, multiple relatively high priority sample containers may be placed and removed from the storage unit before removing a relatively low priority sample container from the storage unit. More specifically, sample containers having a relatively low priority may be placed in a more distant portion of the storing section (relative to the transfer unit) and sample containers having a relatively high priority may be placed in a nearer portion of the storing section.

In addition or alternatively, higher priority containers may be loaded in a portion of the working section closer to the conveying unit than other portions of the working section and/or higher priority containers may be loaded in a portion of the storing section closer to the working section than other portions of the storing section.

The laboratory instrument may be unable to process further sample containers because the laboratory instrument is currently occupied or performing analysis. Hence, When the laboratory instrument is unable to process further sample containers, the load of the laboratory instrument may indicate that the laboratory instrument is currently performing analysis and will be busy for a specified period of time. When the laboratory instrument is able to process further sample containers, it may be that the laboratory instrument is no longer busy and/or analysis is complete. In other words, a scheduling process may dispatch a sample container from the storage unit such that continuous testing is enabled and consequently idle time of the laboratory instrument is minimized.

One sample container may have a higher priority than another sample container for various reasons. For example, a sample container may have a relatively high priority because the corresponding sample relates to an upcoming surgery or an urgent test for a patient. Samples corresponding to a rare test may have a relatively low priority and may be held until enough further samples arrive to justify conducting the rare test.

Accordingly, it may be advantageous to be able to extract an arbitrary sample container from the working section of the storage unit for processing by the laboratory instrument. For example, it is possible that the priority of the sample containers does not correspond to the order in which the sample containers arrive at the laboratory. Some sample containers may need to be processed out of order, e.g., because the samples contained within the containers relate to time sensitive tests or surgeries, or the samples themselves may degrade or become unusable after a period of time. For the extraction, a computing device may be operable to locate sample container within the storage unit based on one or more of the following: a location identifier identifying a location of the sample container within the storage unit, the corresponding container priority, and a sample container identifier.

The container information may further comprise a container identifier. The method may further comprise identifying, based on the corresponding container identifier, at least one of the sample containers for processing by a pre-analysis laboratory instrument of the laboratory automation system. The conveying unit may be configured to convey the at least one identified sample container to the pre-analysis laboratory instrument. The pre-analysis laboratory instrument may be configured to process the at least one identified sample container. The conveying unit may be configured to convey, after the processing, the at least one identified sample container to the storage unit. The pre-analysis laboratory instrument may be a centrifuge, an aliquoter, or a decapper.

It may be advantageous to be able to perform pre-analysis processing on the pre-analysis laboratory instrument even when an analysis laboratory instrument is busy. For example, some samples may require punctual or prompt centrifugation in order to maintain sample quality. By identifying such samples and ensuring that centrifugation is performed, even if the analysis laboratory instrument is busy, sample quality may be maintained. Moreover, after centrifugation, the sample can be stored in the storage unit until the analysis laboratory instrument is ready to process further samples.

In addition, it may be advantageous to automate centrifugation within the laboratory automation system. This may avoid a situation in which laboratory workers need to manually identify samples needing to be centrifuged and perform centrifugation on those samples.

The computing device may be configured to locate a container within the storage unit based on a sample container identifier corresponding to the sample container and a location identifier corresponding to the sample container in the storage unit.

Being able to locate the sample container within the storage unit may be advantageous in order to access arbitrary sample containers within the storage unit. By being able to arbitrarily access sample containers within the storage unit, pre-analysis processing can be performed in order to maintain sample quality for samples requiring pre-analysis processing and analysis can be performed on high priority samples even if those high priority samples arrived later than other lower priority samples.

The laboratory instrument may be an analysis laboratory instrument. The analysis laboratory instrument may be configured to determine one or more characteristics of a sample in a sample container and/or perform a clinical test on a sample in a sample container.

For example, the laboratory instrument may be or include an immunoassay analyzer, a chemistry analyzer, an identification and antibiotic susceptibility analyzer, a bacteriology analyzer, a molecular analyzer, a hematology analyzer or a urinalysis instrument.

The storage unit may further comprise means for protecting the sample containers from vibration. For example, the storage unit may include shelves that are stable and do not move. In addition or alternatively, the storage unit may be insulated from external vibrations.

Means for protecting the sample containers from vibration may be advantageous in maintaining the stability of the samples. For example, a sample may contain a mixture of components and the components may separate when the sample container is vibrated or shaken. More specifically, separated blood contents may remix or become resuspended when subjected to vibration.

Moreover, sample containers on a conveying unit may be exposed to a certain amount of vibration. The storage unit may prevent such vibrations from reaching the sample containers.

The cooling unit may be vertically mounted on the storage unit and/or the cooling unit may be mounted on top of the storage unit. Such a configuration may have the advantages of reducing the possibility of icing, providing better access for maintenance, and providing easier draining.

The conveying unit may comprise a first track and a second track. The first track may be configured to convey sample containers in a first direction. The second track may be configured to convey sample containers in a second direction. The second direction may be opposite to the first direction. Accordingly, the conveying unit may be operable to convey the sample containers to an arbitrary location in the laboratory automation system.

The pick-and-place unit may be operable to pick up items from and place items on the first track and/or the second track.

According to a second aspect, a computer implemented method for processing sample containers is provided. The method comprises receiving, from a user, a plurality of sample containers in a storing section of a storage unit. The method further comprises transferring, by a transfer unit of the storage unit, the sample containers from the storing section to a working section of the storage unit. The method further comprises arranging the plurality of sample containers in the working section. The method further comprises picking up, by a pick-and-place unit of the storage unit, a sample container from the working section and placing the sample container on a conveying unit. The method further comprises conveying the sample container, via the conveying unit from the storage unit to a laboratory instrument configured to process the sample contained in the sample container.

The method may further comprise receiving the sample containers at an input component. The method may further comprise transferring the sample containers from the input component to a distribution component. The method may further comprise receiving, at the distribution component, container information for each of the sample containers, the container information comprising a container priority. The method may further comprise determining, by a computing device and based on a load of the laboratory instrument, whether the laboratory instrument is able to process further sample containers. The method may further comprise conveying, by the conveying unit, upon determining that the laboratory instrument is unable process further sample containers, the sample containers from the distribution component to the storage unit.

Transferring from the input component to the distribution component may be carried out via a further pick-and-place unit or gripping unit.

Advantageously, the sample containers can be maintained in a stable condition in the storage unit until the laboratory instrument is available to process further sample containers. Moreover, since container information for each of the sample containers has been received, the sample containers can be further processed according to container priority rather than in a first in first out or arbitrary order.

According to a third aspect, a computer program is provided. The computer program comprises instructions that, when the program is executed by a computer, cause the computer to carry out the method described above.

The subject matter described in this disclosure can be implemented as a method or on a device, possibly in the form of one or more computer programs (e.g., computer program products). Such computer programs may cause a data processing apparatus to perform one or more operations described in the present disclosure.

The subject matter described in the present disclosure can be implemented in a data signal or on a machine readable medium, where the medium is embodied in one or more information carriers, such as a CD-ROM, a DVD-ROM, a semiconductor memory, or a hard disk. In particular, disclosed subject matter may be tangibly embodied in a non-transitory machine (computer) readable medium.

In addition, the subject matter described in the present disclosure can be implemented as a system including a processor, and a memory coupled to the processor. The memory may encode one or more programs to cause the processor to perform one or more of the methods described in the application. Further subject matter described in the present disclosure can be implemented using various machines.

Details of one or more implementations are set forth in the exemplary drawings and description that follow. Other features will be apparent from the description, the drawings, and from the claims.

### Brief Description of the Drawings

FIG 1 shows a laboratory automation system in a first configuration.
FIG 2 shows the laboratory automation system in a second configuration.
FIG 3 shows a top view of a first storage unit.
FIG 4 shows a side view of the first storage unit.
FIG 5 shows a top view of a second storage unit.
FIG 6 shows a side view of the second storage unit.
FIG 7 shows a top view of a third storage unit.
FIG 8 shows a side view of the third storage unit.
FIG 9 shows a top view of a fourth storage unit.
FIG 10 shows a side view of the fourth storage unit.
FIG 11 shows a top view of fifth storage unit.
FIG 12 shows exemplary sample container carriers.
FIG 13 shows a flow chart according to an embodiment.

### Detailed Description

In the following text, a detailed description of examples will be given with reference to the drawings. Various modifications to the examples may be made. In particular, one or more elements of one example may be combined and used in other examples to form new examples.

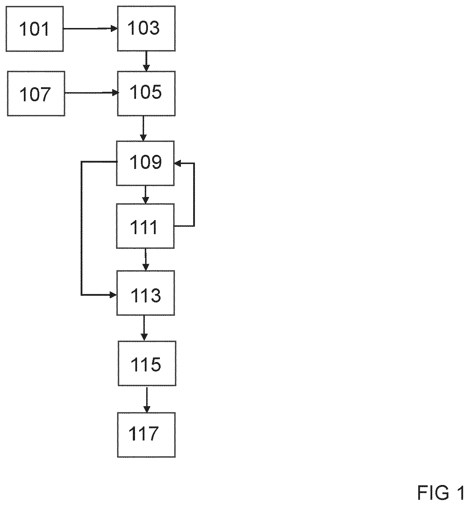

Figure 1 shows a laboratory automation system in a first configuration. At 101, sample containers in sample container carriers may be loaded into an input component 103. The sample container carriers may be implemented as racks and/or the sample containers may be implemented as tubes (e.g., glass or plastic tubes). From the input component 103, the sample containers may be transferred (e.g., via a further pick-and place unit) to a distribution component 105. In addition or alternatively, sample containers may be loaded in bulk at 107 to the distribution component 105. When loading in bulk at 107, the sample containers may be contained in alternative sample container carriers such as cartons or boxes including separators to isolate and protect each sample container.

From the distribution component 105, the sample containers may be conveyed via the conveying unit to a storage unit 109. From the storage unit 109, the sample containers may be conveyed to a pre-analysis laboratory instrument 111. More specifically, the sample containers may be conveyed to a centrifuge. In some cases, container information of the sample containers may be used to determine whether to convey the sample containers to the pre-analysis laboratory instrument 111. For example, a sample container identifier may be used to determine whether to convey the sample containers to the pre-analysis laboratory instrument 111.

After processing by the pre-analysis laboratory instrument 111, the sample containers may be conveyed via the conveying unit back to the storage unit 109. For example, if an analysis laboratory instrument 113 is unable to process further sample containers, then the sample containers may be conveyed via the conveying unit from the pre-analysis laboratory instrument 111 to the storage unit 109. Upon determining that the analysis laboratory instrument 113 is able to process further sample containers, the sample containers may be conveyed via the conveying unit from the storage unit 109 to the analysis laboratory instrument 113.

After analysis at the analysis laboratory instrument 113, the sample containers may be conveyed via the conveying unit to a further storage unit 115. Upon determining that the sample containers are no longer needed, the sample containers may be conveyed via the conveying unit to a waste disposal 117.

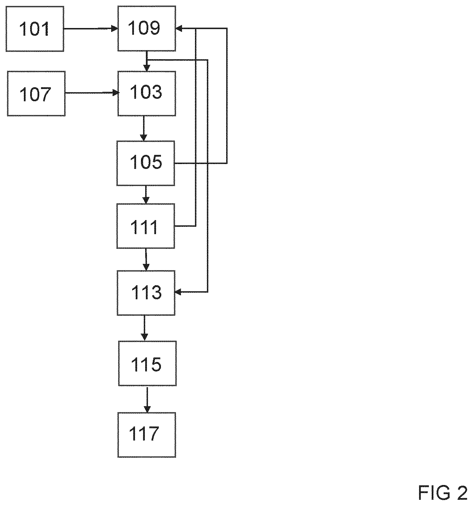

Figure 2 shows the laboratory automation system in a second configuration. At 101, sample containers in sample container carriers may be loaded into the storage unit 109. From the storage unit 109, the sample containers may be conveyed via the conveying unit to the input component 103. Alternatively, sample containers may be loaded in bulk at 107 into the input component 103, as described above.

From the input component 103, the sample containers may be conveyed to the distribution component 105. When the analysis laboratory instrument 113 is unable to process further sample containers, the sample containers may be conveyed, via the conveying unit, from the distribution component 105 back to the storage component 109. Sample containers that have been identified for processing (e.g., based on a corresponding sample container identifier) by the pre-analysis laboratory instrument 111 may be conveyed, via the conveying unit, from the distribution component 105 to the pre-analysis laboratory instrument 111. If the analysis instrument 113 is unable to process further sample containers, the sample containers may be conveyed from the pre-analysis laboratory instrument 111 back to the storage unit 109. When the analysis instrument is able to process further sample containers (e.g., as determined by a computing device), the sample containers may be conveyed via the conveying unit from the storage unit 109 to the analysis instrument 113.

After analysis, the sample containers may be conveyed via the conveying unit to a further storage unit 115 and finally to a waste disposal 117.

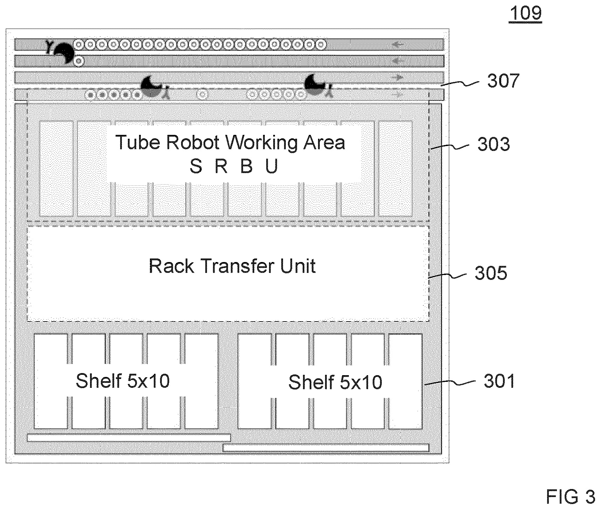

Figure 3 shows a top view of a first storage unit 109. The first storage unit 109 may include a storing section 301, where a plurality of sample containers may be arranged by a user, and a working section 303, where the plurality of sample containers may be arranged to be accessible by a pick-and-place unit (e.g., a tube robot). The working section 303 may be referred to as a storage rack builder unit (SRBU). The storing section 301 may be implemented as a set of shelves. At least the working section 303 may be cooled. A transfer unit 305, also referred to as a rack transfer unit, may be implemented to transfer sample containers between the working section 303 and the storing section 301. The pick-and-place unit may be operable to pick up a sample container in the working section 303 and place the sample container on a conveying unit 307.

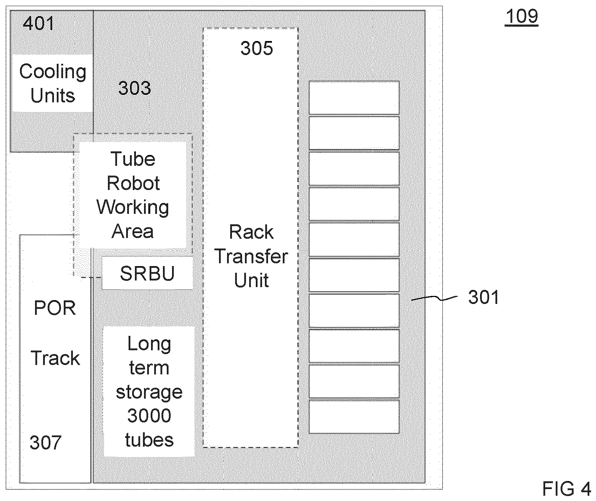

Figure 4 shows a side view of the first storage unit 109. The plurality of sample containers may be arranged by a user in the storing section 301. The transfer unit 305 may transfer the sample containers between the working section 303 and the storing section 301, or vice versa. The pick-and-place unit may be configured to pick up a sample container in the working section 303 and place the sample container on the conveying unit 307. One or more cooling units 401 may be configured to control air temperature, particularly for the working section 303.

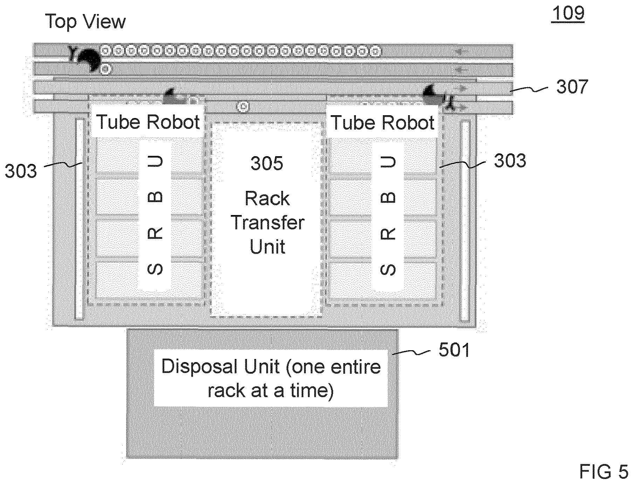

Figure 5 shows a top view of a second storage unit 109. The second storage unit 109 includes a plurality of working sections 303. In addition, the second storage unit 109 includes a rack transfer unit 305. The second storage unit 109 is connected to the conveying unit 307 as well as a disposal unit 501.

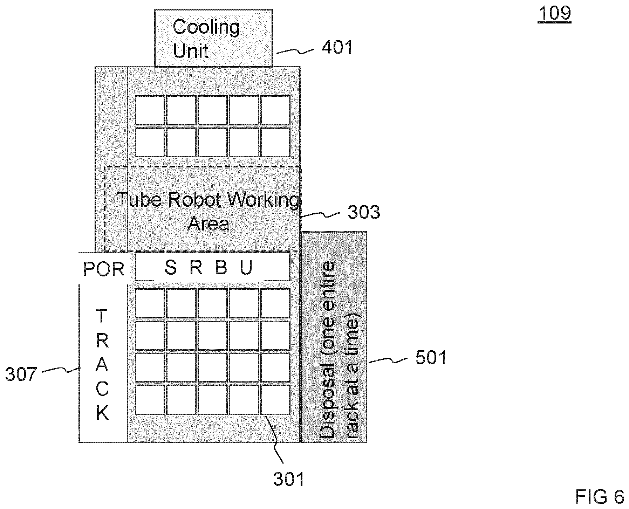

Figure 6 shows a side view of the second storage unit 109. As shown, the second storage unit 109 includes the storing section 301, the working section 303, and the cooling unit 401. The second storage unit 109 is connected to the conveying unit 307 and the disposal unit 501.

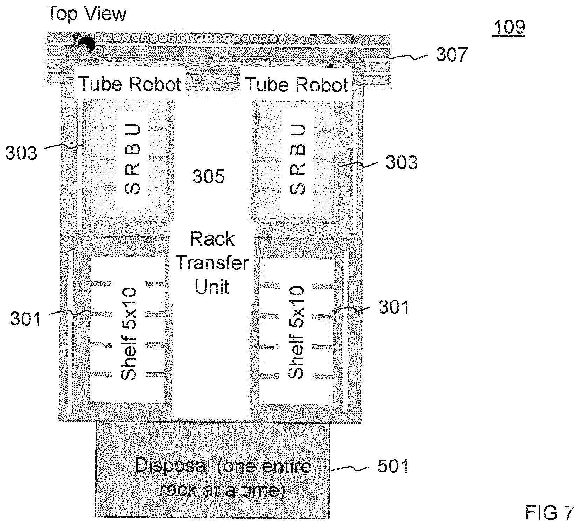

Figure 7 shows a top view of a third storage unit 109. The third storage unit 109 includes storing sections 301, working sections 303 and the transfer unit 305. In addition, the third storage unit 109 is connected to the conveying unit 307 as well as the disposal unit 501.

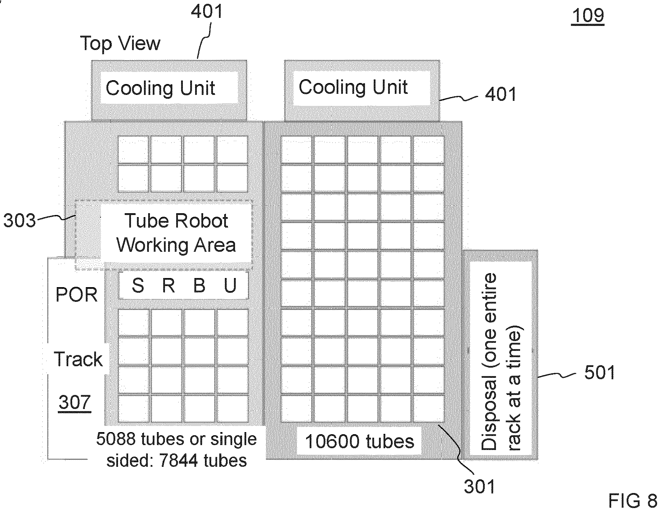

Figure 8 shows a side view of the third storage unit 109. The third storage unit 109 includes the storing section 301, the working section 303 and the cooling units 401. The third storage unit 109 is connected to the conveying unit 307 and the disposal unit 501.

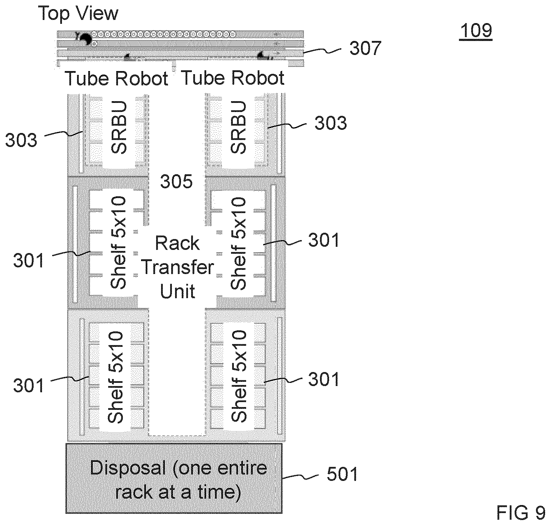

Figure 9 shows a top view of a fourth storage unit 109. The fourth storage unit 109 includes working sections 303, storage sections 301 and transfer unit 305. In addition, the fourth storage unit 109 is connected to the conveying unit 307 and the disposal unit 501.

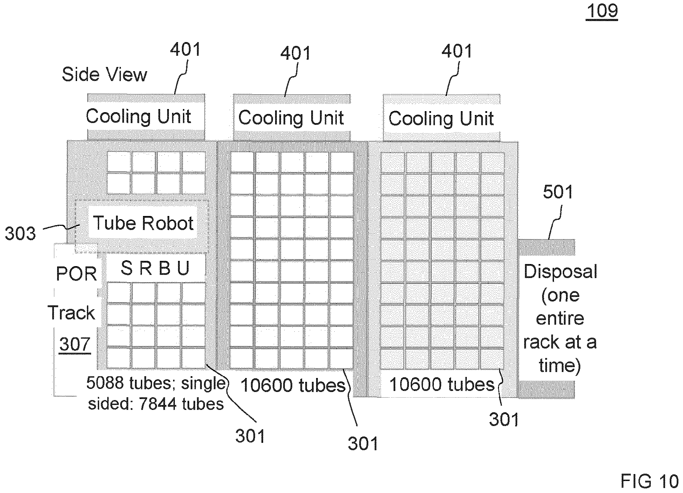

Figure 10 shows a side view of the fourth storage unit 109. The fourth storage unit 109 includes storage sections 301, working section 303, and cooling units 401. As shown, the cooling units 401 are mounted on top of the storage unit 109. This configuration may be advantageous in that icing is less of an issue, it may be easier to access the storage sections 301, it may be easier to access the cooling units 401 for maintenance and it may be easier to drain the cooling units 401. The fourth storage unit 109 may be connected to the conveying unit 307 and the disposal unit 501.

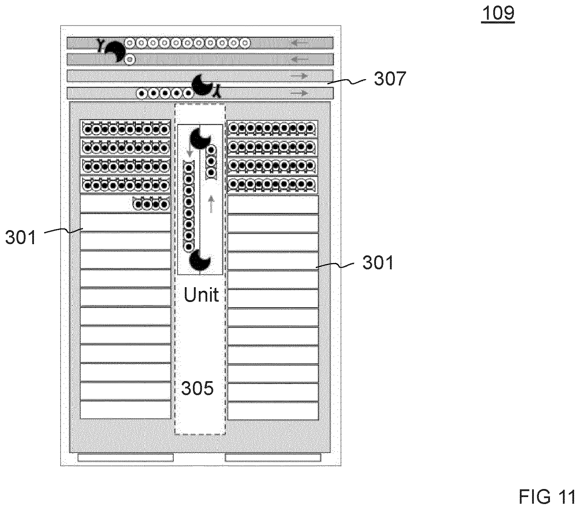

Figure 11 shows a top view of fifth storage unit 109. The fifth storage unit 109 includes storage sections 301 and the transfer unit 305. The sample containers are contained in sample container carriers, e.g., racks. The fifth storage unit 109 is connected to the conveying unit 307.

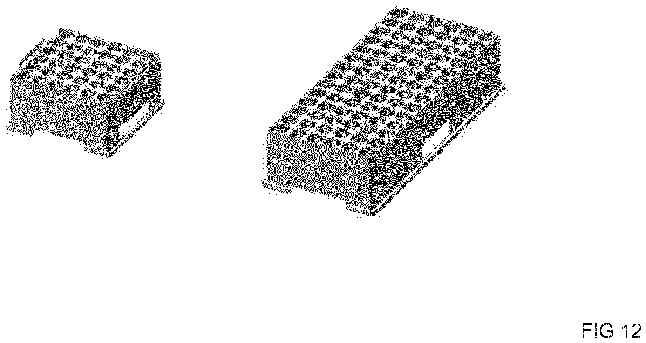

Figure 12 shows exemplary container carriers. The container carriers have been implemented as racks. The container carriers hold either 36 (6x6) containers or 84 (6×14) containers. Other sizes are also possible.

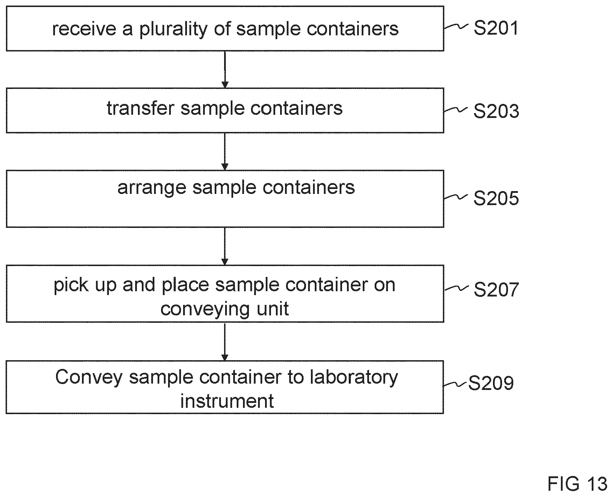

Figure 13 shows a flow chart of a method for processing sample containers. At S201, the method comprises receiving, from a user, a plurality of sample containers in a storing section of a storage unit. The storage unit may correspond to the storage unit 109. The storing section may be a part of the storage unit that is accessible to the user. Other parts of the storage unit might not be accessible to the user. The sample containers may be stackable in the storing section. The sample containers may be provided in one or more sample container carriers.

At S203, the method further comprises transferring, by a transfer unit of the storage unit, the sample containers from the storing section to a working section of the storage unit. The working section may correspond to a portion of the storage unit that is not physically accessible to the user.

At step S205, the method further comprises arranging the plurality of sample containers in the working section. The arranging may be carried out by the transfer unit. For example, the sample containers may be arranged in carriers or racks.

At step S207, the method further comprises picking up, by a pick-and-place unit of the storage unit, a sample container from the working section and placing the sample container on a conveying unit. Step S207 may be carried out after determining that a laboratory instrument (e.g., an analysis laboratory instrument) is available to process the sample container.

At step S209, the method further comprises conveying the sample container, via the conveying unit, from the storage unit to a laboratory instrument configure to process the sample contained in the sample container.

## Claims

1. A laboratory automation system for processing sample containers, comprising:
a storage unit (109) configured to receive and store sample containers,
at least one laboratory instrument (113) configured to process samples contained in the sample containers,
a conveying unit (307) configured to convey sample containers between the storage unit (109) and the laboratory instrument (113),
wherein the storage unit (109) comprises:
a pick-and-place unit,
a working section (303),
a storing section (301), and
a transfer unit (305),
wherein the working section (303) is configured such that a plurality of sample containers may be arranged therein to be accessible by the pick-and-place unit,
wherein the pick-and-place unit is configured to pick up a sample container in the working section (303) and to place said sample container on the conveying unit (307),
wherein the pick-and-place unit is further configured to pick up a sample container on the conveying unit (307) and to place said sample container in the working section (303);
wherein the storing section (301) is configured such that a plurality of sample containers may be arranged therein by a user, and
wherein the transfer unit (305) is configured to transfer the sample containers between the working section (303) and the storing section (301).

2. The system of claim 1, wherein one or more of the following applies:
the conveying unit (307) is configured to convey the sample containers in sample container carriers,
the sample containers are arranged in sample container holders in the working section (303),
the pick-and-place unit is configured to pick up the sample container from a sample container holder in the work section and to place the sample container on a sample container carrier on the conveying unit (307), and
the transfer unit (305) is configured to transfer the sample container holders between the working section (303) to storing section (301).

3. The system of claim 1 or 2, wherein the storage unit (109) further comprises a cooling unit (401) configured to control air temperature, wherein the cooling unit (401) is configured to cool the working section (303) and/or the storing section (301).

4. The system of any one of the preceding claims, wherein the conveying unit (307) is configured to convey sample containers to the laboratory instrument (113) based on a load of the laboratory instrument (113).

5. The system of any one of the preceding claims, further comprising:
an input component (103) configured to receive sample containers; and/or
a distribution component (105) configured to receive container information for each of the sample containers, the container information comprising a container priority,
wherein a further pick-and-place unit is configured to transfer the sample containers from the input component (103) to the distribution component (105).

6. The system of claim 5, further comprising:
a computing device configured to determine, based on a load of the laboratory instrument (113), whether the laboratory instrument (113) is able to process further sample containers;
wherein the conveying unit (307) is further configured to convey, upon determining that the laboratory instrument (113) is unable to process further sample containers, the sample containers from the distribution component (105) to the storage unit (109);
wherein the computing device is further configured to:
prioritize the sample containers in the storage unit (109) for processing by the laboratory instrument (113) according to the corresponding container priority of each sample container; and
upon determining that the laboratory instrument (113) is able to process further sample containers, instruct the pick-and-place unit to extract, from the working section (303), at least one of the sample containers for processing by the laboratory instrument (113) according to the corresponding container priority;
wherein the conveying unit (307) is further configured to transport the sample containers to the laboratory instrument (113) for processing.

7. The system of claim 5 or 6, wherein the container information further comprises a container identifier; wherein the system is further configured to identify, based on the corresponding sample container identifier, at least one of the sample containers for processing by a pre-analysis laboratory instrument (111) of the laboratory automation system;
wherein the conveying unit (307) is configured to convey the at least one identified sample container to the pre-analysis laboratory instrument (111);
wherein the pre-analysis laboratory instrument (111) is configured to process the at least one identified sample container;
wherein the conveying unit (307) is configured to convey, after the processing, the at least one identified sample container to the storage unit (109);
wherein the pre-analysis laboratory instrument (111) is a centrifuge, an aliquoter or a de-capper.

8. The system of claim 6 or 7, wherein the computing device is configured to locate a container within the storage unit (109) based on a sample container identifier corresponding to the sample container and a location identifier corresponding to the sample container in the storage unit (109).

9. The system of any one of the preceding claims, wherein the storage unit (109) further comprises means for protecting the sample containers from vibration.

10. The system of any one of the preceding claims, wherein the cooling unit (401) is vertically mounted on the storage unit (109) and/or the cooling unit (401) is mounted on top of the storage unit (109).

11. The system of any one of the preceding claims wherein the conveying unit (307) comprises a first track and a second track, wherein the first track is configured to convey sample containers in a first direction, wherein the second track is configured to convey sample containers in a second direction, wherein the second direction is opposite to the first direction.

12. A computer-implemented method for processing sample containers, comprising:
receiving (S201), from a user, a plurality of sample containers in a storing section (301) of a storage unit (109);
transferring (S203), by a transfer unit (305) of the storage unit (109), the sample containers from the storing section (301) to a working section (303) of the storage unit (109);
arranging (S205) the plurality of sample containers in the working section (303);
picking up (S207), by a pick-and-place unit of the storage unit (109), a sample container from the working section (303) and placing the sample container on a conveying unit (307);
conveying (S209) the sample container, via the conveying unit (307), from the storage unit (109) to a laboratory instrument (113) configured to process the sample contained in the sample container.

13. The method of claim 12, further comprising,
receiving the sample containers at an input component (103);
transferring the sample containers from the input component (103) to a distribution component (105);
receiving, at the distribution component (105), container information for each of the sample containers, the container information comprising a container priority;
determining, by a computing device and based on a load of the laboratory instrument (113), whether the laboratory instrument (113) is able to process further sample containers; and
conveying, by the conveying unit (307), upon determining that the laboratory instrument (113) is unable to process further sample containers, the sample containers from the distribution component (105) to the storage unit (109).

14. The method of claim 12 or 13, further comprising:
placing sample containers having a relatively low priority in a portion of the storing section (301) more distant from the working section (303) than other portions of the storing section (301);
placing sample containers having a relatively high priority in a portion of the storing section (301) closer to the working section (303) than other portions of the storing section (301); and optionally
placing sample containers having a relatively low priority in a portion of the working section (303) more distant from the conveying unit (307) than other portions of the working section (303);
placing sample containers having a relatively high priority in a portion of the working section (303) closer to the conveying unit (307) than other portions of the working section (303).

15. A computer program comprising instructions that, when the program is executed by a computer, cause the computer to carry out the method of any one of claims 12 to 14.
